Europäisches Patentamt

European Patent Office

Office européen des brevets

(19)

(11) Numéro de publication : **0 138 027**
**B1**

(12)                    **FASCICULE DE BREVET EUROPÉEN**

(45) Date de publication du fascicule du brevet :
04.03.87

(51) Int. Cl.⁴ : **B 60 B 21/10**, B 60 B 21/02

(21) Numéro de dépôt : **84110540.6**

(22) Date de dépôt : **05.09.84**

(54) **Jante en une seule pièce conformée de manière à retenir le bourrelet sur son siège et procédé de montage de l'enveloppe sur sa jante.**

(30) Priorité : 15.09.83 FR 8314819

(43) Date de publication de la demande :
24.04.85 Bulletin 85/17

(45) Mention de la délivrance du brevet :
04.03.87 Bulletin 87/10

(84) Etats contractants désignés :
AT BE CH DE GB IT LI LU NL SE

(56) Documents cités :
FR-A- ·653 036
FR-A- 686 035
FR-A- 2 254 444
FR-A- 2 533 864
GB-A- 283 660
US-A- 2 074 284
US-A- 3 212 548

(73) Titulaire : **MICHELIN & CIE (Compagnie Générale des Etablissements Michelin) Société dite:**
**4 rue du Terrail**
**F-63040 Clermont-Ferrand (FR)**

(72) Inventeur : **Lescoffit, Claude**
**6 rue Diderot**
**F-63400 Chamalieres (FR)**

(74) Mandataire : **Renaudie, Jacques et al**
**Michelin & Cie Service K. Brevets**
**F-63040 Clermont-Ferrand Cédex (FR)**

EP 0 138 027 B1

Jouve, 18, rue St-Denis, 75001 Paris, France

## Description

La présente invention se rapporte aux jantes en une seule pièce destinées à recevoir des enveloppes de pneumatique, plus particulièrement celles dont le profil est de forme étudiée pour retenir le bourrelet sur son siège. Elle se rapporte également au procédé de montage d'une enveloppe sur une telle jante.

Comme on le sait, une jante en une seule pièce comporte obligatoirement un creux de jante pour permettre le montage de l'enveloppe, et deux sièges sur lesquels, sous l'effet de la pression de gonflage, viennent se placer et se coincer les bourrelets de l'enveloppe. Extérieurement, chaque siège est prolongé par le rebord de jante qui s'éloigne de l'axe de la roue. Usuellement, les sièges sont inclinés par rapport à l'axe de rotation de la roue d'un angle (appelé conicité) de 5° en tourisme et de 15° en poids lourds. Les rebords de jante sont de forme et de hauteur variables. Ils participent, avec la conicité, au positionnement et à la retenue extérieure des bourrelets de l'enveloppe de pneumatique.

Lorsqu'un effort transversal est appliqué au pneumatique, dû par exemple à la force centrifuge lors d'un virage pris à grande allure, il peut se produire un décoincement : un bourrelet extérieur au virage quitte son siège, se trouve repoussé vers l'intérieur de la jante pendant son passage entre la route et la jante parce que la force transversale de réaction à la force centrifuge n'est pas compensée par la force résultant de la pression de gonflage. Le bourrelet risque de quitter le bord de jante de telle manière qu'il puisse tomber dans le creux de jante. A ce moment, l'extrémité opposée de l'enveloppe peut passer par-dessus le bord de jante et l'enveloppe déjante.

On connaît divers moyens visant à améliorer la résistance au décoincement par le choix d'une forme appropriée de la jante. Un de ces moyens consiste à retenir le bourrelet du côté intérieur de jante par une butée, communément désignée par « hump ». L'usage de pareils humps s'est d'ailleurs généralisé pour les pneumatiques de tourisme montés sans chambre à air. Ces humps sont de formes normalisées.

L'efficacité de tels humps, quoique appréciable, se révèle parfois insuffisante.

Un bourrelet est relativement rigide du fait de la présence d'une ou de plusieurs tringles, parfois de renforts câblés ou en gomme à haut module. Cette rigidité est nécessaire pour solidariser l'enveloppe avec sa jante. Cette rigidité limite la possibilité d'extension radiale de la base du bourrelet et, partant, elle limite la hauteur du hump qui permet un montage aisé de l'enveloppe. La pleine efficacité des humps s'en trouve compromise.

D'autres méthodes luttant contre le décoincement des bourrelets ont été proposées, notamment dans la demande FR-A-2 378 643 ou dans la demande FR-A-2 471 290. Cependant, ces propositions nécessitent l'emploi d'enveloppes dont les bourrelets sont spécifiques. Dans la demande FR-A-2 378 643, le bourrelet doit comporter une pointe de gomme, et dans la demande FR-A-2 471 290, le bourrelet doit avoir une conicité grande, fonction de la hauteur de hump. Il s'agit donc chaque fois d'ensembles pneumatiques comprenant une jante particulière nécessitant le montage d'une enveloppe elle aussi particulière.

L'objet de la présente invention est une jante qui puisse retenir le bourrelet sur son siège de façon absolue, c'est-à-dire même pour un roulage à plat.

L'invention est indépendante du siège de montage proprement dit, de sa conicité, de ses dimensions, et est indépendante de la forme et de la constitution du bourrelet de l'enveloppe.

On parviendra à ce résultat en réalisant, entre au moins un siège et le creux de jante, une butée de hauteur supérieure à la hauteur d'un hump classique. Dans cette butée, il faut pratiquer une encoche de forme spéciale permettant le montage de l'enveloppe en respectant une méthode particulière.

La jante pour roue de véhicule suivant l'invention est du type en une seule pièce et possède un creux de jante de montage situé entre deux sièges sur chacun desquels se monte un bourrelet d'enveloppe de pneumatique, chaque siège étant prolongé axialement vers l'extérieur de jante par un rebord de jante s'étendant axialement et radialement vers l'exterieur de la jante, ledit rebord de jante formant butée extérieure et positionnant axialement le bourrelet ; ladite jante est pourvue entre au moins un de ses deux sièges et le creux de jante, d'une butée de retenue axiale du bourrelet distante du rebord de jante d'une largeur supérieure ou égale à la largeur du bourrelet, ladite butée étant pourvue d'au moins une encoche ; ladite jante est remarquable en ce que ladite butée a une hauteur supérieure à la hauteur d'un hump classique et en ce que ladite encoche est de largeur supérieure ou égale à la largeur du bourrelet, est orientée suivant un angle $\alpha$ compris entre 10° et 90° par rapport à la direction circonférentielle, est telle que le rayon de jante mesuré à la surface extérieure de jante et au droit de l'encoche reste toujours inférieur au rayon de jante mesuré au bord axialement interne du siège, est donc conformée de manière telle qu'elle puisse recevoir le bourrelet de l'enveloppe et le guider depuis le creux jusqu'au siège lorsque le montage est effectué par rotation relative de l'enveloppe et de la jante, compte tenu de la largeur séparant la butée du rebord de jante.

La méthode de montage consiste donc à visser le bourrelet sur le siège. On procède de la manière suivante : le bourrelet est engagé sur l'encoche et sur le siège, ce qui se fait facilement et sans déformation en profitant du creux de jante, comme pour franchir un rebord de jante ; puis, par rotation relative de l'enveloppe et de la jante (autrement dit, en vissant), le bourrelet quitte progressivement le creux de jante pour se placer sur son siège. En fin de montage, le bourrelet doit franchir la butée en se dilatant ; ce franchissement final se fait soit par rotation de l'enveloppe sur la jante, soit par montée en pression. Le démontage s'effectue de la manière suivante : les outils de démontage (leviers, etc.) sont utilisés pour repousser le bourrelet de l'enveloppe au droit de l'encoche. Le bourrelet est encore repoussé en un autre endroit proche du premier en dehors de l'encoche. Ledit bourrelet franchit alors la butée pour tomber dans le creux de jante, et le démontage final se fait de manière classique.

Cette technique de montage minimise la déformation du bourrelet nécessaire pour qu'il franchisse une butée de diamètre extérieur donné. En effet, le bourrelet ne doit pas s'étendre radialement en tous les points de la circonférence au même moment ; il ne doit pas se dilater jusqu'au diamètre extérieur maximal de la butée ou jusqu'à un diamètre presque équivalent. Par le montage selon l'invention sur une jante selon l'invention, il suffit que le bourrelet se déforme radialement jusqu'à une dimension mesurée comme un diamètre mais comprise entre le sommet de la butée et le fond du siège adjacent.

C'est grâce à l'effet de démultiplication de la technique de montage en vissant que l'on parvient à forcer le bourrelet à franchir une butée de hauteur très grande.

L'invention sera mieux comprise à l'aide des dessins décrivant deux exemples particuliers et non limitatifs de jantes selon l'invention.

La figure 1 montre une perspective d'une jante selon l'invention.

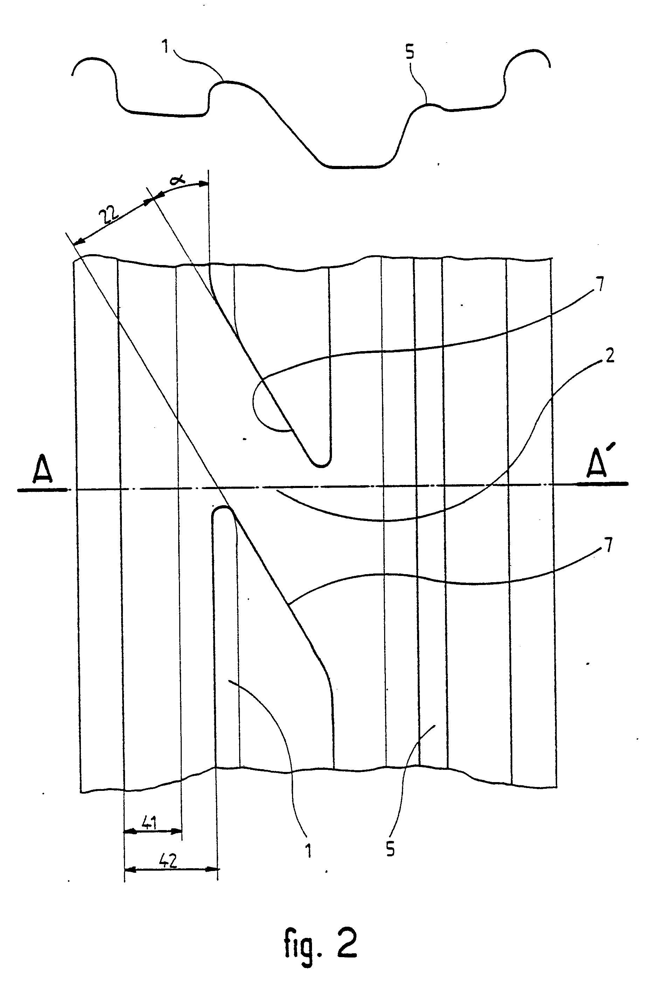

La figure 2 est une vue en élévation d'une jante suivant l'invention, montrant l'encoche.

La figure 3 est une coupe suivant AA' de la figure 2 et représente donc un profil de la jante suivant l'invention.

La figure 4 est une vue en élévation schématisant un autre mode de réalisation de l'invention.

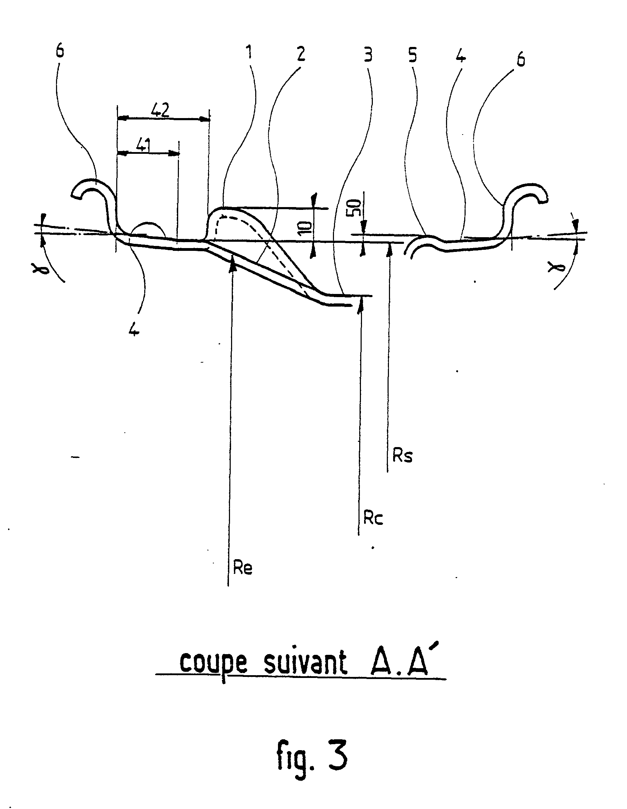

On voit sur ces figures la butée (1) de grande hauteur, ainsi que l'encoche de montage caractéristique. La figure 3 représente le profil d'une jante à base creuse (3) et comportant deux sièges de montage (4) des bourrelets connus en soi. Le hump (5) est d'un des types connus de hauteur (50) nécessairement faible. Les rebords (6) de jante sont également de forme connue.

La conicité $\gamma$ des sièges peut être quelconque et est en tout état de cause indépendante de l'invention.

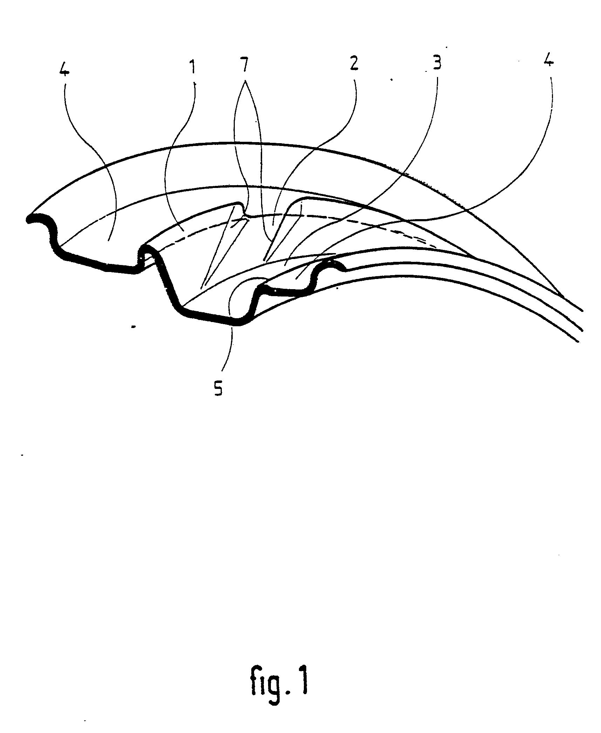

La coupe, pratiquée au niveau de l'encoche de montage laisse bien apparaître la butée (1) de hauteur importante (10). La largeur (41) du siège n'est pas caractéristique. Sa valeur est dictée par l'encombrement du bourrelet. La largeur (42) est au moins égale à la largeur (41). De préférence, elle lui est supérieure afin de faciliter le montage du bourrelet en lui permettant de s'incurver de manière plus progressive. L'encoche (2) est au moins aussi large que le bourrelet. Afin de bien comprendre le mécanisme de montage, on consultera principalement la figure 1. L'angle $\alpha$ que fait l'encoche avec la direction longitudinale permet de guider le bourrelet depuis le creux de jante (3) jusqu'au siège (4). Il peut être choisi dans des limites très larges, à savoir entre 10° et 90°, et de préférence entre 15° et 60°. Cependant, les paramètres (42), $\alpha$, (22) ne peuvent être choisis indépendamment l'un de l'autre.

L'angle $\alpha$ compris dans l'intervalle (10°, 90°), est fonction des largeurs (42) et (22). Il est clair qu'il doit être faible si l'une de ces largeurs ou les deux largeurs sont proches de leur valeur minimale (41).

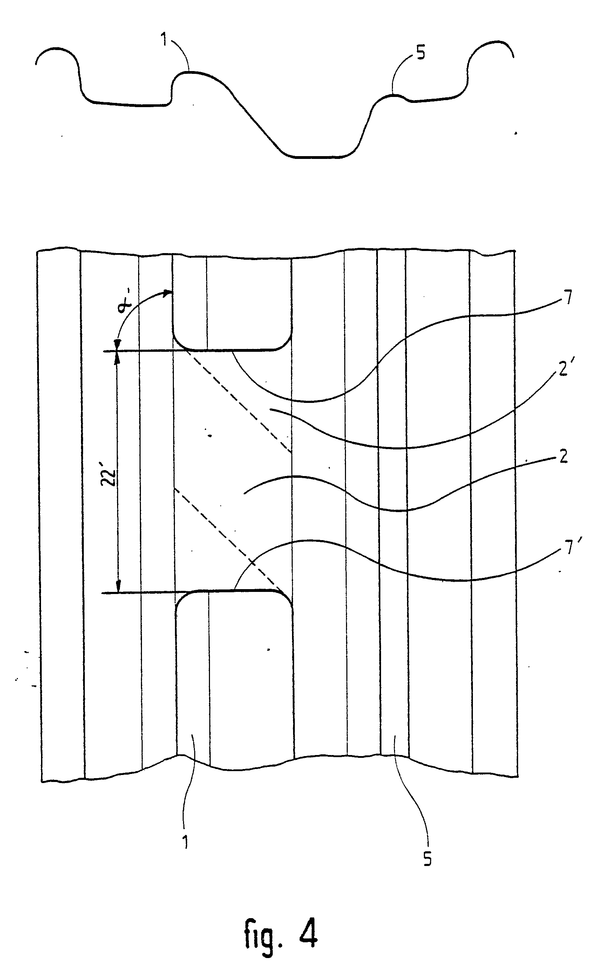

Il est clair également que si $\alpha$ est proche de 90°, la largeur de l'encoche (22) doit être très supérieure à la largeur du bourrelet (41). De plus, éventuellement, la largeur (42) doit aussi être supérieure à la largeur (41), ceci d'autant plus que la largeur (22) diminue. On consultera à ce sujet la figure 4 qui montre que l'encoche (2') peut être de configuration quelconque, par exemple $\alpha$ = 90° et largeur = (22'), pourvu qu'elle soit circonscrite à l'encoche (2) strictement nécessaire pour permettre le montage. Notamment, les traces des faces latérales (7) dans une vue en plan peuvent être très arrondies.

Quant au rayon (Re) de la jante, mesuré au droit de l'encoche, il reste toujours inférieur au rayon ($R_s$) mesuré au bord axialement interne du siège, et varie de préférence progressivement entre le rayon ($R_c$) au creux de jante et le rayon ($R_s$).

Les faces latérales (7) de l'encoche de montage peuvent être radialement parallèles. De préférence, elles s'écartent lorsqu'on s'éloigne de l'axe de rotation de la roue. Il peut être avantageux d'incliner assez la face latérale orientée vers l'intérieur de jante pour que le bourrelet franchisse facilement la butée en fin de montage.

On peut munir la jante d'une ou de deux butées et encoches selon l'invention.

Dans le cas où une seule butée munie d'une encoche est prévue, on la dispose bien sûr de préférence du côté extérieur au véhicule. On peut encore équiper ou non l'autre côté d'un hump connu.

Le principe de montage de l'enveloppe sur son siège impose de ménager une encoche particulière dans la butée. Mais on peut, sans sortir de la présente invention, prévoir plusieurs encoches par butée. De préférence, on les dispose pour réaliser un équilibre statique de la jante.

A titre d'illustration de l'invention, le tableau suivant donne quelques hauteurs (10) de butées (1) réalisées sur jantes ayant une conicité $\gamma$ des sièges tout à fait classique (5° en tourisme, 15° en poids lourds).

(Voir tableau page 4 )

| | Diamètre de jante | Hauteur (10) minimale pour empêcher le décoincement | Hauteur (10) minimale jusqu'à laquelle le montage est possible |
|---|---|---|---|
| De | 30,48 à 40,64 cm (12″ à 16″) | 3 mm | 8 mm |
| De | 44,45 à 49,53 cm (17,5″ à 19″5) | 6 mm | 12 mm |
| Au-dessus de | 49,53 cm (19″5) | 10 mm | 15 mm |

La dernière colonne mentionne des hauteurs minimales (10) jusqu'auxquelles le montage est possible parce que, ces hauteurs dépendant quelque peu du type d'enveloppe, elles peuvent être plus grandes encore.

Dans une autre application, l'invention permet aussi de réaliser des ensembles indémontables. L'utilisation de l'encoche pour visser le bourrelet sur son siège autorise une butée (1) de hauteur (10) élevée. Au démontage, cette utilisation n'est plus possible dans les mêmes conditions et on est obligé de pousser le bourrelet par-dessus la butée. Pour une jante de 30,48 à 40,64 cm (12″ à 16″) de diamètre, la hauteur (10) minimale assurant l'indémontabilité de l'enveloppe est de 6 mm. En conséquence, l'invention permet aussi de réaliser des ensembles pneumatiques indémontables utilisant des enveloppes usuelles.

L'invention s'applique aux ensembles pneumatiques pour deux-roues, voitures de tourisme, camionnettes et poids lourds.

**Revendications**

1. Jante pour roue de véhicule, du type en une seule pièce, possédant un creux de jante de montage (3) situé entre deux sièges (4) sur chacun desquels se monte un bourrelet d'enveloppe de pneumatique, chaque siège étant prolongé axialement vers l'extérieur de jante par un rebord (6) de jante ledit rebord de jante formant butée extérieure et positionnant axialement le bourrelet, s'étendant radialement et axialement vers l'extérieur de la jante, ladite jante étant pourvue, entre au moins un des deux sièges (4) et le creux de montage (3), d'une butée (1) de retenue axiale du bourrelet distante du rebord de jante d'une largeur (42) supérieure ou égale à la largeur (41) du bourrelet, ladite butée (1) étant pourvue d'au moins une encoche (2), caractérisée en ce que ladite butée (1) à une hauteur (10) supérieure à la hauteur d'un hump classique et en ce que ladite encoche (2) a une largeur (22) égale ou supérieure à la largeur (41) du bourrelet, est orientée suivant un angle $\alpha$ compris entre 10° et 90° par rapport à la direction circonférentielle, est telle que le rayon de jante ($R_e$) mesuré à la surface extérieure de jante et au droit de l'encoche (2) reste toujours inférieur au rayon de jante mesuré au bord axialement interne du siège ($R_s$), de telle sorte que ladite encoche (2) peut recevoir le bourrelet de l'enveloppe et le guider depuis le creux (3) jusqu'au siège (4) lorsque le montage est effectué par rotation relative de l'enveloppe et de la jante compte tenu de la largeur séparant la butée du rebord (6) de jante.

2. Jante suivant la revendication 1, caractérisée en ce que l'angle $\alpha$ est compris entre 15° et 60°.

3. Jante suivant l'une quelconque des revendications 1 ou 2, caractérisée en ce que le rayon ($R_e$) mesuré à la surface extérieure de jante et au droit de l'encoche varie progressivement depuis la valeur du rayon au creux de jante ($R_c$) jusqu'à la valeur du rayon au bord axialement interne du siège ($R_s$).

4. Procédé de montage d'une enveloppe sur une jante selon l'une quelconque des revendications 1 à 3, caractérisé en ce qu'un bourrelet au moins est monté depuis le creux de jante (3) jusqu'à son siège (4) par rotation relative de l'enveloppe et de la jante.

**Claims**

1. A rim for a vehicle wheel, of the single-piece type, having a rim mounting well (3) located between two seats (4) on each of which a tyre bead is to be mounted, each seat being extended axially towards the outside of the rim by a rim flange (6), said rim flange forming an outer stop and axially positionning the tyre bead, which extends axially and radially towards the outside of the rim, said rim being provided, between at least one of the two seats (4) and the mounting well (3), with a stop (1) for the axial retention of the tyre bead spaced from the rim flange by a width (42) at least equal to the width (41) of the tyre bead, said stop (1) being provided with at least a notch (2), characterized by the fact that said stop has a height (10) greater than the height of a conventional hump, and by the fact that said notch (2) has a width (22) at least equal to the width (41) of the tyre bead, is oriented at an angle $\alpha$ of between 10° and 90° with respect to the circumferential direction of the rim, is such that the rim radius (Re) measured at the outer surface of the rim at the place of the notch (2) is always less than the rim radius measured at the axially inner edge of the seat ($R_s$), so that said notch (2) can receive the tyre bead and guide it from the mounting well (3) up to its seat (4) when the mounting is effected by relative rotation of the tyre and the rim, with due consideration of the width between the stop and the rim flange.

2. A rim according to claim 1, characterized by the fact that the angle $\alpha$ is between 15° and 60°.

3. A rim according to claim 1 or 2, characterized by the fact that the rim radius (Re) measured at the outer surface of the rim at the place of the notch changes gradually from the value of the rim radius (Rc) measured at the rim well up to the value of the rim radius measured at the axially inner edge of the seat (Rs).

4. A method of mounting a tyre on a rim, said rim being defined by any of the claims 1 to 3, characterized by the fact that at least one tyre bead is mounted from the mounting well (3) up to its seat (4) by relative rotation of the tyre and the rim.


**Patentansprüche**

1. Einstückige Felge für Kraftfahrzeugräder mit einer Montagerille (3), die zwischen zwei Sitzen (4) angeordnet ist, wobei jeder Sitz zur Aufnahme eines Wulstes eines Reifens dient, und jeder Sitz in axialer Richtung nach außen durch einen, einen äußeren Wulst bildenden und den axialen Sitz des Reifens sichernden Felgenrand (6), der radial und axial nach außen, gesehen von der Felge, verlangert ist, wobei die Felge zumindest zwischen einem der beiden Sitze (4) und der Montagerille (3) mit einem Vorsprung (1) versehen ist, der der axialen Halterung des Wulstes dient und dessen Abstand vom Rand der Felge eine Größe (42) aufweist, die gleich ist der oder größer ist als die Stärke (41) des Wulstes, wobei der Vorsprung (1) mindestens eine Ausnehmung (2) aufweist, dadurch gekennzeichnet, daß der Vorsprung (1) eine Höhe (10) besitzt, die größer ist als die Höhe einer klassischen Montageausbuchtung, weiters dadurch gekennzeichnet, daß die Ausnehmung (2) eine Länge (22) besitzt, die gleich ist der oder größer ist als die Dicke (41) des Wulstes und in einem Winkel $\alpha$ angeordnet ist, der zwischen 10° und 90°, in Bezug auf die Umfangsrichtung, geneigt ist, so daß der Radius der Felge ($R_e$), gemessen auf der äußeren Oberfläche der Felge und am Grund der Ausnehmung (2) immer kleiner ist als der Radius der Felge, der am axial inneren Rand des Sitzes ($R_s$) gemessen wird, sodaß die Ausnehmung (21) während der Montage, die durch Relativverdrehung des Luftreifens gegenüber der Felge ausgeführt wird, zufolge des Abstandes des Vorsprunges vom äußeren Felgenrand den Luftreifenwulst aufnehmen und ihn über die Vertiefung (3) bis zum Sitz (4) führen kann.

2. Felge nach Anspruch 1, dadurch gekennzeichnet, daß der Winkel $\alpha$ zwischen 15° und 60° beträgt.

3. Felge nach einem der Ansprüche 1 oder 2, dadurch gekennzeichnet, daß der Radius ($R_e$), gemessen auf der äußeren Oberfläche der Felge und auf kürzestem Wege in der Ausnehmung, zwischen der Größe des Radius in der Montagerille ($R_c$) und dem Radius des axial inneren Randes des Sitzes ($R_s$) variiert.

4. Verfahren zur Montage eines Reifens auf einer Felge nach einem der Ansprüche 1 bis 3, dadurch gekennzeichnet, daß zumindest ein Wulst über die Montagerille (3) bis zu seinem Sitz (4) durch Relativverdrehung des Reifens gegenüber der Felge aufgebracht wird.

5

fig. 1

fig. 2

coupe suivant A.A′

fig. 3

fig. 4